Europäisches Patentamt

European Patent Office

Office européen des brevets

(11) Numéro de publication: **0 016 706**
**A1**

## DEMANDE DE BREVET EUROPEEN

(21) Numéro de dépôt: **80400370.5**

(22) Date de dépôt: **19.03.80**

(51) Int. Cl.³: **G 01 N 17/00**

(30) Priorité: **21.03.79 FR 7907175**

(43) Date de publication de la demande:
**01.10.80 Bulletin 80/20**

(84) Etats Contractants Désignés:
**BE DE GB IT LU NL**

(71) Demandeur: **Société Anonyme dite: INTERSUB
DEVELOPPEMENT
40/42 rue de la Couture (31/33 rue de Villeneuve) Silic
455
F-95493 Rungis Cedex(FR)**

(72) Inventeur: **Stankoff, Alain Georges
245, Avenue Jean-Jaurès
F-92140 Clamart(FR)**

(74) Mandataire: **Boukhors, Alain et al,
Cabinet BEAU de LOMENIE 55, Rue d'Amsterdam
F-75008 Paris(FR)**

(54) Procédé et dispositif de contrôle de l'état d'une structure en béton armé immergée dans un liquide électriquement conducteur.

㊗ Selon un mode de réalisation de ce procédé, on mesure la densité de courant continu circulant à proximité de la surface de la structure (2) en plusieurs points répartis sur cette surface à l'aide d'un dispositif de détection (3) fixé à l'amont d'un sousmarin (1).

L'invention s'applique notamment au contrôle de plateforme de béton immergée.

EP 0 016 706 A1

./...

FIG. 2

- 1 -

Procédé et dispositif de contrôle de l'état d'une
structure en béton armé immergée dans un liquide électriquement conducteur.

La présente invention concerne un procédé
de contrôle et de surveillance de l'état d'une structure en maçonnerie armée immergée dans un liquide conducteur de l'électricité.

L'invention concerne aussi un dispositif pour
la mise en oeuvre de ce procédé.

Dans une méthode permettant d'inspecter l'intégrité du revêtement d'une plate-forme en béton usuelle immergée, l'un des problèmes à résoudre résulte
de la disproportion entre l'étendue de la surface à
examiner (par exemple de l'ordre de 40.000 m$^2$) et la
taille des défauts susceptibles d'engendrer des dommages sérieux, à savoir des fissures de l'ordre de
1/10 mm s'étendant sur 1 m. Le rapport entre la surface active du défaut et la surface totale à inspecter
est ainsi de l'ordre de 10$^{-9}$, ce qui signifie que la
probabilité de détecter de tels défauts par une méthode visuelle directe est très faible, à moins d'analyser un volume de données gigantesque (10$^7$ à 10$^8$ clichés).

Par ailleurs, même en supposant les défauts
ainsi localisés, la question de l'influence réelle de
ces défauts sur l'intégrité du béton reste entière
car il est très difficile de juger si une fissure débouchante atteint ou non les armatures, provoquant
ainsi leur corrosion, et à terme, l'éclatement du béton.

L'invention a notamment pour but de proposer
un procédé remédiant à ces inconvénients et permettant une localisation rapide des seuls défauts du
revêtement ou de la surface en béton de la structure immergée susceptibles d'entraîner une détérioration croissante de ladite structure par la corrosion d'armature.

Ce but est atteint, conformément à l'invention, du fait que l'on mesure la densité de courant continu circulant à proximité de la surface de la structure en plusieurs points répartis sur cette surface, moyennant quoi on repère les endroits éventuels où la structure présente une défectuosité soumettant une armature à l'action corrosive du liquide d'immersion libre entourant la structure, cette corrosion produisant un courant continu circulant dans le liquide d'immersion au voisinage de ladite défectuosité.

La Demanderesse a constaté que le courant continu présente une intensité suffisante pour être détecté à des distances de la structure très supérieures à la largeur de l'ouverture (par exemple fissure) constituant ladite défectuosité. Il en résulte que le taux d'échantillonnage (nombre de mesures) requis pour détecter une anomalie de la structure est notablement réduit par rapport à celui qui est requis par la méthode selon l'art antérieur (méthode visuelle).

Avantageusement, on effectue en outre une localisation grossière de la défectuosité de la manière suivante : on applique une tension électrique entre au moins un élément d'armature métallique de la structure et une électrode disposée dans le liquide d'immersion à une certaine distance de la structure, et on mesure la densité de courant électrique circulant à proximité de la surface de la structure immergée, le long d'une ligne de balayage de cette surface.

Avantageusement, la tension électrique appliquée est une tension alternative et on mesure sélectivement la composante alternative de même fréquence, de la densité de courant, moyennant quoi on améliore la sensibilité de la détection de défectuosités.

Avantageusement, en vue d'effectuer une mesure quantitative du taux de corrosion des armatures mises en contact avec le liquide d'immersion, on mesure la densité de courant continu à une distance de la surface de structure plus faible que celle à laquelle on mesure la densité de courant lors de la première phase de localisation et/ou en des points de mesure plus rapprochés les uns des autres que lors de ladite première phase.

Avantageusement, on mesure la densité de courant en mesurant principalement la composante perpendiculaire à la surface de la structure, de la densité de courant circulant dans le liquide d'immersion au voisinage de cette surface.

Ainsi, la méthode proposée dans le cadre d'une application sous-marine de la présente invention est basée sur la détection des courants électriques dus à la corrosion des armatures du béton, celles-ci étant soumises à l'eau de mer libre à travers un système de fissures superficielles.

Normalement, les fers à béton étant totalement englobés dans un milieu basique, la corrosion ne peut avoir lieu, même en présence d'eau salée interstitielle.

En revanche, si une fissure atteint de façon significative la surface des armatures, le fer se trouve alors en milieu neutre et l'eau de mer libre peut entamer le processus de corrosion avec une vitesse dépendant du renouvellement de l'oxygène dissout. Dans le stade ultime, le fer corrodé subit des changements de volume entraînant l'éclatement de la gangue de béton et la propagation du système de fissures.

La Demanderesse a constaté que le phénomène de corrosion d'armature se traduit par des courants

- 4 -

électriques, de sorte que la recherche de ces courants électriques effectuée à une certaine distance de la structure permet une localisation des fissures réellement actives. Une évaluation quantitative de la gravité du défaut peut ainsi être effectuée : surface fissurée, vitesse de corrosion.

Un autre avantage du procédé selon l'invention est que les courants électriques, représentatifs de la corrosion ou dus à l'application de la tension entre un élément d'armature et l'électrode éloignée, ces courants sont détectables dans un espace beaucoup plus important que le volume de la fissure elle-même, ce qui permet de localiser les défauts avec un taux d'échantillonnage beaucoup plus faible qu'avec des méthodes visuelles. Le volume d'information à traiter reste donc raisonnable.

D'autres caractéristiques et avantages de l'invention seront mieux compris à la lecture de la description qui va suivre d'un exemple de réalisation et en se référant aux dessins annexés sur lesquels :

- la figure 1 est une vue schématique en perspective d'un mode de mise en oeuvre de l'invention, et

- la figure 2 est une vue schématique en perspective montrant l'inspection d'un caisson sous-marin par un véhicule, selon un mode de mise en oeuvre de l'invention.

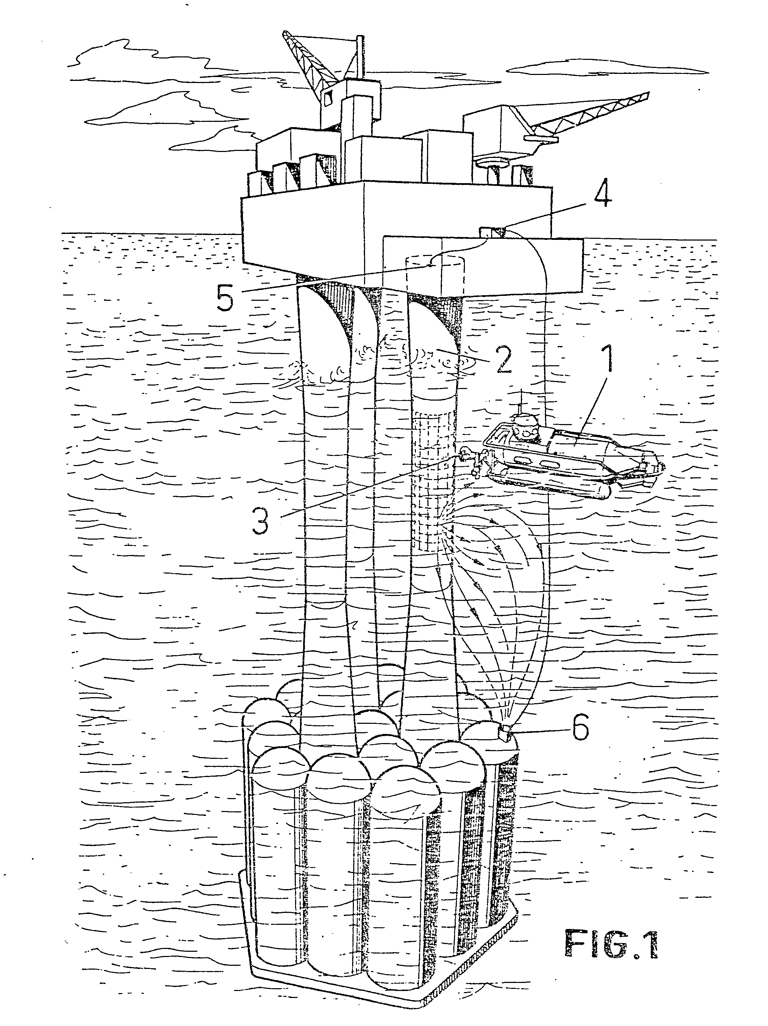

Durant une première phase d'inspection, on réalise un repérage grossier des zones actives (présentant des défauts) par un quadrillage systématique du secteur à inspecter (voir figure 1). Le sous-marin 1 utilisé est équipé d'un dispositif de navigation tridimensionnelle relativement précis pour connaître les positions des mesures (par exemple navigation à inertie et jauge de pression corrigée de la marée).

- 5 -

0016706

Deux types de mesures sont effectuées pendant ce quadrillage systématique en vue d'identifier les zones soumises à la corrosion : a) une mesure de densité de courant continu et b) une mesure de densité de courant alternatif.

a) une mesure en courant continu obtenue par exemple grâce à un capteur de densité de courant du type décrit dans la demande de brevet français n° 2.354.563 déposée par la Demanderesse le 10 juin 1976, cette mesure permettant d'évaluer la densité de courant continu émise localement par la plate-forme - ou structure - immergée 2. Ce capteur est prévu dans un dispositif de détection 3 fixé à l'avant du sous-marin 1.

Comme la distance entre le capteur (3) et la structure 2 ne peut être maintenue constante facilement et que l'orientation du véhicule 1 ne peut être contrôlée constamment, la mesure n'est pas réellement quantitative mais seulement représentative.

La sensibilité obtenue typiquement par un capteur de densité de courant du type susmentionné est de l'ordre de 1 mA/m2 ce qui équivaut à une perte en fer de l'ordre de 18 g/m2/an ou à une variation de volume de 2,3 cm3/m2/an.

L'importance du défaut correspondant à ce seuil de détectabilité dépend bien sûr de l'étendue du défaut mais un tel seuil de détectabilité permet déjà une analyse préventive de l'intégrité du revêtement d'une plate-forme immergée telle que 2.

b) Une mesure en courant alternatif à plus grand rayon d'action, moins représentative de la situation du revêtement ou de la corrosion de la structure mais permettant de localiser des défauts de cette structure là où circule un courant continu parasite important, (par exemple dans le cas d'une conduite protégée par un dispositif de protection cathodique particulier).

Un générateur de courant alternatif 4 est branché entre le système d'armatures métalliques de la plate-forme (en 5) et une électrode 6 relativement éloignée de la zone à inspecter. Le système d'armatures métalliques constitue une zone à basse impédance grossièrement équipotentielle, et la densité de courant superficielle alternative résultante est alors proportionnelle à la différence de potentiel délivrée par le générateur 4 et à la conductance locale du revêtement en béton, conductance représentative du degré de fissuration. Cette densité de courant alternatif est par exemple mesurée par un capteur du type dérivé du précédent (l'élément effectuant le découpage du courant ayant été supprimé). Ce capteur étant situé dans le dispositif 3 avec le capteur de densité de courant continu.

Par ailleurs, le fait d'injecter un courant alternatif dans les armatures élimine l'influence des sources parasites qui limite l'efficacité du capteur, comme les courants dus à la corrosion relative au véhicule 1, et l'influence de la géométrie locale sur ces lignes de courant.

A l'issue de cette première phase d'investigation, les résultats sont traités sur ordinateur de façon à repérer les zones particulièrement actives de la surface de la structure 2 ; la représentation des résultats peut être obtenue au moyen de courbes de niveau ou par codage couleur sur un terminal approprié. Une analyse qualitative est effectuée sur ces documents qui permet de délimiter les zones suspectes où le degré de corrosion dépasse un seuil considéré comme critique.

Les zones suspectes sont alors réinspectées soigneusement par le véhicule 1 par des prises de clichés photographiques à haute résolution, par une mesure de la densité de courant continu exacte par application d'un capteur de densité de courant sur la surface en béton, etc. Cette analyse complémentaire permet d'établir définitivement si une réparation doit être effectuée assez rapidement ou, au contraire, si la zone peut être laissée en l'état sous réserve d'une surveillance plus attentive.

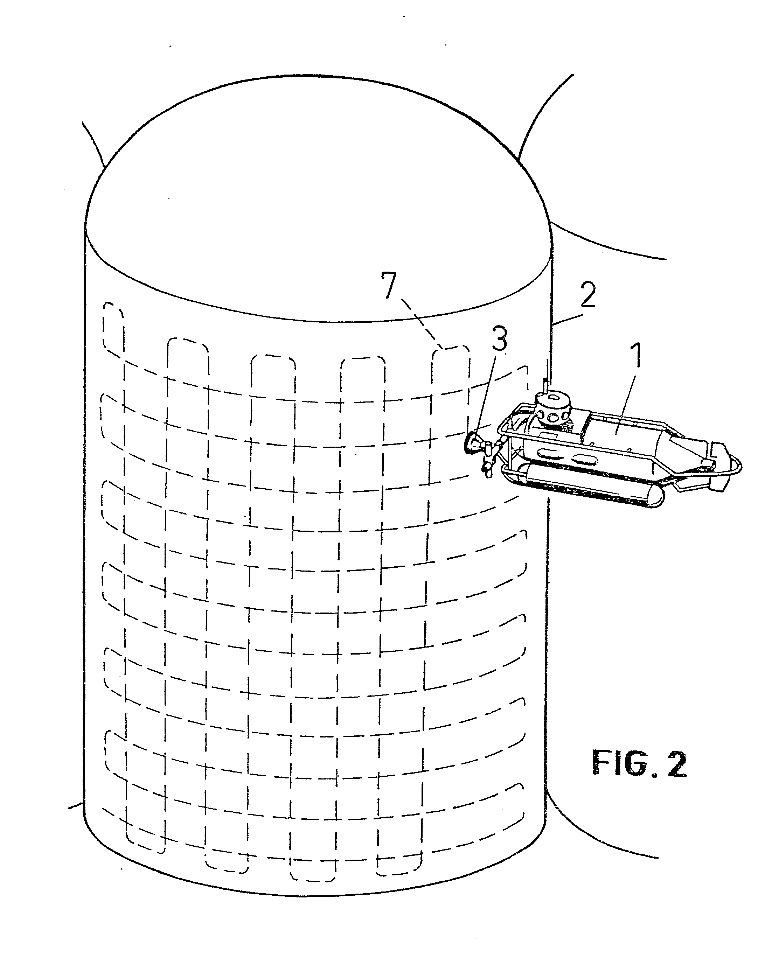

Comme le montre la figure 2 le véhicule 1, lors de la première phase d'investigation, parcourt une trajectoire telle que le dispositif 3 balaye la surface de la structure 2 suivant une ligne de quadrillage 7 de cette surface.

Revendications

1. Procédé de contrôle et de surveillance de l'état d'une structure en maçonnerie armée (2) immergée dans un liquide conducteur de l'électricité, caractérisé en ce que l'on mesure la densité de courant continu circulant à proximité de la surface de la structure en plusieurs points répartis sur cette surface, moyennant quoi on repère les endroits éventuels où la structure présente une défectuosité soumettant une armature à l'action corrosive du liquide d'immersion libre entourant la structure, cette corrosion produisant un courant continu circulant dans le liquide d'immersion au voisinage de ladite défectuosité.

2. Procédé selon la revendication 1, caractérisé en ce que l'on effectue en outre une localisation grossière de la défectuosité de la manière suivante :

On applique une tension électrique entre au moins un élément d'armature métallique (5) de la structure et une électrode (6) disposée dans le liquide d'immersion à une certaine distance de la structure, et on mesure la densité du courant électrique circulant à proximité de la surface de la structure immergée, le long d'une ligne de balayage (7) de cette surface.

3. Procédé selon la revendication 2, caractérisé en ce que la tension électrique appliquée est une tension alternative et on mesure sélectivement la composante alternative de même fréquence, de la densité de courant, moyennant quoi on améliore la sensibilité de la détection de défectuosités.

4. Procédé selon l'une quelconque des revendications 2 et 3, caractérisé en ce que l'on mesure la densité de courant continu à une distance de la surface de structure plus faible que celle à laquelle on mesure la densité de courant lors de la première phase de localisation et/ou en des points de mesure plus rapprochés les uns des autres que lors de ladite première phase.

5. Procédé selon l'une quelconque des revendications 1 à 4, caractérisé en ce que l'on mesure la densité de courant en mesurant principalement la composante perpendiculaire à la surface de la structure, de la densité de courant circulant dans le liquide d'immersion au voisinage de cette surface.

6. Dispositif pour la mise en oeuvre du procédé selon l'une quelconque des revendications 1 à 5, caractérisé en ce qu'il comprend un véhicule sous-marin (1) portant un détecteur (3) de la densité du courant circulant dans le liquide d'immersion.

7. Dispositif selon la revendication 6, caractérisé en ce qu'il comprend en outre des moyens (4) pour appliquer une tension électrique entre au moins un élément d'armature métallique (5) de la structure (2) et une électrode (6) immergée se trouvant à une certaine distance de ladite structure.

FIG.1

0016706

FIG. 2

Office européen
des brevets

**RAPPORT DE RECHERCHE EUROPEENNE**

Numero de la demande
EP 80 40 0370

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernee | G 01 N 17/00 |
| . | FR - A - 2 376 223 (CONTINENTAL OIL CO.) <br> * Page 4, lignes 1-32; figure 1 * <br> -- | 1,6 | |
| | FR - A - 2 355 285 (COPRELEC) <br> * Page 8, revendication 1; figure 2 * <br> -- | 1 | |
| | FR - A - 2 365 797 (INTERSUB DE-VELOPPEMENT) <br> * Page 5, revendication 1; fi-gures * <br> -- | 1 | DOMAINES TECHNIQUES RECHERCHES (Int. Cl.³) <br><br> G 01 N 17/00 |
| | US - A - 4 078 510 (J.H. MORGAN) <br> * Page 1, en entier * | 1 | |

CATEGORIE DES DOCUMENTS CITES

X: particulièrement pertinent
A: arrière-plan technologique
O. divulgation non-écrite
P: document intercalaire
T: theorie ou principe à la base de l'invention
E: demande faisant interférence
D: document cité dans la demande
L: document cite pour d'autres raisons

&: membre de la même famille, document correspondant

X Le present rapport de recherche a eté etabli pour toutes les revendications

| Lieu de la recherche | Date d'achevement de la recherche | Examinateur |
|---|---|---|
| La Haye | 23-06-1980 | DUCHATELLIER |

OEB Form 1503.1  06.78